# EUROPEAN PATENT SPECIFICATION

(11) **EP 0 733 174 B1**
(45) Date of publication and mention of the grant of the patent: **24.03.1999**
(21) Application number: 94905277.3
(22) Date of filing: 06.12.1993
(51) Int. Cl.: F16H 1/22, B60K 7/00

(54) **GEAR DEVICE**
GETRIEBEVORRICHTUNG
DISPOSITIF D'ENGRENAGES

(43) Date of publication of application: 25.09.1996
(73) Proprietor: Parker Hannifin AB, 52323 Ulricehamm (SE)
(72) Inventor: HYDREN, Ingvar, S-462 40 Vänersborg (SE)
(74) Representative: Delmar, John-Ake
(86) International application number: SE9301052
(87) International publication number: WO9516151

(56) References cited:
- EP-A- 0 227 152
- DE-A- 2 826 022
- US-A- 4 983 153
- US-A- 5 233 886

## Description

The present invention refers to a gear device comprising a first crown wheel and a first pinion meshing therewith as well as a second crown wheel opposed to and coaxial with said first crown wheel and a second pinion meshing directly with said second crown wheel.

A device of this kind, disclosing the features of the preamble of claim 1, is previously known from US-5,233,886. The advantage of this gear device is that several power outputs may be arranged from a common driving power shaft. The device also provides for a doubling of the power which can be transferred compared to other designs having only one crown wheel. This known gear device therefore is particularly well suited to be used in connection with power transmissions in helicopters.

Plane crown wheels or face wheels of the kind which can be used in gear devices according to said aforementioned US patent specification are known from e.g. EP 0,227,152. DE-A-1 450 829 is an example of a previously known angle gearing including a cylindrical pinion and a face gear.

Recently a design problem has arisen, in which relatively great momentum with relatively great gearing ratio has to be transferred in a very restricted space to a driven means, particularly a wheel. The desired gear ratio has to be of the order of 1:8 to 1:10 and therefore the use of a planetary gear device can not be advantageously utilized because the optimum gear ratio of planetary gearings in one stage is limited to about 1:6.

However, a gear ratio of the order of about 1:8 - 1:10 may be obtained by means of a crown wheel device, particularly a device of plane type. Calculations have shown, however, that about only one half of the desired driving moment can be transferred with such a gear ratio to the driven means or wheel by means of a single crown wheel and one single pinion meshing therewith. By means of two crown wheels according to the aforementioned US patent specification this will be possible, however, only while providing a counter rotating motion of the two crown wheels which in many cases makes the design complicated and also is non-desirable from other points of view.

The main object of the invention now is to suggest a crown wheel device of the above-stated kind which allows a transfer of such a double driving moment without suffering from the drawbacks of prior designs. This is achieved according to the invention substantially in that the second pinion is arranged in parallel with the first pinion and adapted to mesh therethrough with the first crown wheel, said pair of crown wheels rotating in the same direction and toothplay therebetween, if any, being eliminated by a common play-accomodating suspension thereof.

A disadvantage of prior crown wheel constructions having only one pinion on the output shaft of a driving motor is that bending deformations of the shaft cause load variations since the pinion operates one-sidedly loaded from the crown wheel. This is entirely eliminated in twin-crown wheel designs and by having the second pinion operating under the intermediation of the first pinion an advantageous operation situation to the entire construction is obtained. Through the first pinion mounted to the drive shaft and meshing directly with the first crown wheel the power of the driving moment is transferred whereas the second pinion has a supporting function and relieves loads occuring from the above-stated bending moment. This functional division of the two pinions now makes it possible to optimize each of them to the respective function, particularly in that the second pinion is mounted on a shaft having an intentionally dimensioned journalling for accomodating the bending forces.

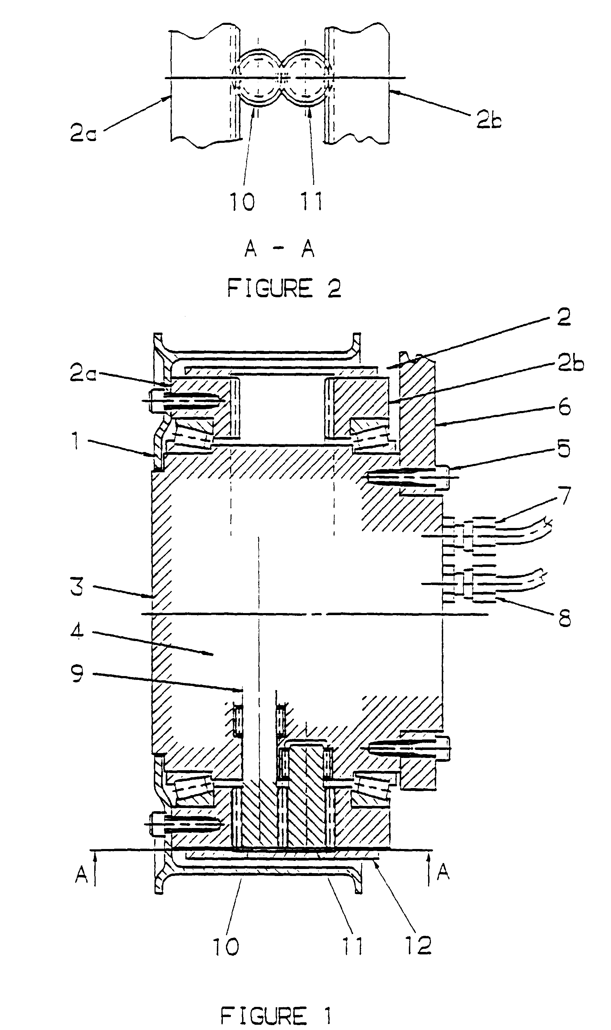

By way of example the invention will be further described below with reference to the accompanying drawing, in which Fig. 1 is a diametrical section through the inventive gear device and Fig. 2 is an end view taken in the plane of the line A-A of Fig. 1.

In the drawing is illustrated the present invention as applied to the driving of a vehicle wheel having a wheel rim 1 which is secured to one of the crown wheels 2a of an inventive gear device generally designated 2. Said first crown wheel 2a, which in the present case is of plane type, i.e. a face gear, is rotationally supported by the casing 3 of a drive motor 4 mounted substantially within the free space in the wheel. Through said casing 3 and by suitable bolt connections 5 the motor 4 is rigidly secured to a portion 6 of the lower part or chassis of a vehicle not further illustrated. The driving motor 4 in the present case is thought to be a hydraulic motor and therefore comprises suitable hydraulic connections 7, 8 to a hydraulic system within the vehicle comprising a hydraulic pump. However, the motor 4 also might be an electric motor of suitable kind having corresponding electric connections 7 and 8 to a generator or an accumulator in the vehicle.

At its free end the output shaft 9 of the driving motor 4 is provided with a gear or pinion 10 which in this case is constituted by a cylindrical gear adapted to cooperate with the face gear 2a. The shaft 9 thereby lies on a line which is parallel to a radius of the face gear 2a and at a suitable spacing from the tooth surface of the face gear in order to mesh with the teeth thereof.

Coaxially with and opposed to said first crown wheel or face gear 2a a second face or crown wheel 2b is rotatably journalled on the drive motor casing 3 and meshes with the first pinion 10 through an intermediary second pinion 11 which, of course, also is a cylindrical gear in the present case and mounted on an axis which is parallel to the shaft 9 and is freely rotatably journalled in the casing 3.

Owing to the fact that the crown wheel 2b is driven under the intermediation of the intermediary pinion 11 from the first pinion 10 the two crown wheels 2a, 2b will rotate in the same direction contrary to prior constructions. This implies improved driving conditions to the two pinions 10 and 11, which increase their service life. The meshing of the pinions 10, 11 and crown wheels 2a, 2b also will be improved.

The tooth play which may arise in the meshing between the two crown wheels 2a, 2b and the respective pinion 10, 11 in some cases might need to be eliminated or accomodated in some way and this may be obtained, as indicated in Fig. 1, by supporting the two crown wheels 2a, 2b in a common suspension device 12 which allows a small mutual angular adjustment between said pair of crown wheels.

In Fig. 2 it has been illustrated an end view of the mutual meshing of the crown wheels 2a, 2b and the pinions 10, 11.

## Claims

1. A gear device comprising a first crown wheel (2a) and a first pinion (10) meshing therewith as well as a second crown wheel (2b) opposed to and coaxial with said first crown wheel (2a) and a second pinion (11) meshing directly with said second crown wheel (2b), **characterized in** that said second pinion (11) is arranged in parallel with the first pinion (10) and adapted to mesh therethrough with the first crown wheel (2a), said pair of crown wheels (2a, 2b) rotating in the same direction and tooth play therebetween, if any, being eliminated by a common play-accomodating suspension (12) thereof.

2. A device according to claim 1, **characterized in** that the crown wheels (2a, 2b) are of plane type, i.e. so-called face gears, and the pinions (10, 11) are cylindrical.

## Patentansprüche

1. Getriebevorrichtung mit einem ersten Antriebskegelrad (2a) und einem ersten Ritzel (10), das mit diesem in Eingriff steht, sowie einem zweiten Antriebskegelrad (2b), das dem ersten Antriebskegelrad (2a) gegenüberliegt und zu diesem koaxial ist, und einem zweiten Ritzel (11), das direkt mit dem zweiten Antriebskegelrad (2b) in Eingriff steht,
dadurch gekennzeichnet, daß das zweite Ritzel (11) parallel zum ersten Ritzel (10) angeordnet ist und dazu ausgelegt ist, über dieses mit dem ersten Antriebskegelrad (2a) in Eingriff zu stehen, wobei sich das Paar von Antriebskegelrädern (2a, 2b) in dieselbe Richtung dreht und das Zahnspiel dazwischen, falls überhaupt vorhanden, durch eine gemeinsame Spielanpassungsaufhängung (12) dafür beseitigt wird.

2. Vorrichtung nach Anspruch 1,
dadurch gekennzeichnet, daß die Antriebskegelräder (2a, 2b) vom ebenen Typ, d.h. sogenannte Planräder, sind und die Ritzel (10, 11) zylindrisch sind.

## Revendications

1. Dispositif à engrenage comprenant une première couronne de différentiel (2a) et un premier pignon (10) s'engrenant avec cette dernière, ainsi qu'une deuxième couronne de différentiel (2b), opposée à et coaxiale par rapport à ladite première couronne de différentiel (2a), et un deuxième pignon (11), s'engrenant directement avec ladite deuxième couronne de différentiel (2b), caractérisé en ce que ledit deuxième pignon (11) est agencé parallèlement au premier pignon (10) et est adapté pour s'engrener, par son intermédiaire, avec la première couronne de différentiel (2a), ledit couple de couronnes de différentiel (2a, 2b) tournant dans le même sens et un jeu de denture intervenant entre elles, s'il y en a, étant éliminé par un montage suspendu (12) d'équilibrage de jeu commun de celles-ci.

2. Dispositif selon la revendication 1, caractérisé en ce que les couronnes de différentiel (2a, 2b) sont de type plan, c'est-à-dire ce que l'on appelle des engrenages plans, et les pignons (10, 11) sont cylindriques.
